(19) Europäisches Patentamt / European Patent Office / Office européen des brevets

(11) **EP 2 194 504 A1**

(12) **EUROPEAN PATENT APPLICATION**

(43) Date of publication:
**09.06.2010 Bulletin 2010/23**

(51) Int Cl.:
***G06T 7/00*** (2006.01)

(21) Application number: **08170482.7**

(22) Date of filing: **02.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Koninklijke Philips Electronics N.V.
5621 BA Eindhoven (NL)**

(72) Inventor: **The designation of the inventor has not yet been filed**

(74) Representative: **Damen, Daniel Martijn
Philips
Intellectual Property & Standards
P.O. Box 220
5600 AE Eindhoven (NL)**

(54) **Generation of a depth map**

(57)    A method of generating a depth map for an image comprises the following steps: displaying the image, displaying an indication on the image in a first region of the image, displaying a plurality of labels, receiving a user input selecting one of the plurality of labels, setting a label for the first region to the selected label, repeating steps two to five for a different region, until a predefined event has occurred, accessing a predefined scheme for converting a label map to a depth map, and generating a depth map according to the predefined scheme and labels set following the user inputs.

Fig.1

EP 2 194 504 A1

**Description**

FIELD OF THE INVENTION

This invention relates to a method of, and system for, generating a depth map. In one embodiment, the invention can be used for a question interface for 3D picture creation. The invention may be applied, for example, in a digital picture frame or on an interactive website.

BACKGROUND OF THE INVENTION:

It is likely that in the near future three-dimensional (3D) display devices will become increasingly common in home and business environments. Such devices are either stereoscopic, which require the user to wear special glasses to see the 3D image, or autostereoscopic, which do not require any special glasses in order to see the 3D image. To create a 3D image, two different 2D images are needed, that are provided one to left eye of the user and the other to the right eye of the user. It is also sufficient to provide a single image and either an additional depth map or disparity map, which contains sufficient information to allow the second image to be generated. This latter solution has a number of advantages because it allows more flexibility in the final delivery of the 3D image. However, it is the case that at the present time, and for the foreseeable future, most images and video will be generated as a 2D image frame. In order to create a 3D image when the original source is a 2D image, then a depth map needs to be created. This depth map can be used to create the second image, or can be used to create a disparity map for a second image.

Various known methods exist to estimate such a depth map with minimal user input. Vezhnevets and Konouchine have developed a method where a user indicates a small part of the foreground and background regions using scribbles and a segmentation algorithm derives an edge-aligned segmentation from the user scribble. The user must then assign a depth value to the indicated area. For more detail, see Vezhnevets V., Konouchine V., "'Grow-Cut' - Interactive Multi-Label N-D Image Segmentation by cellular automata", Proc. Graphicon 2005 http://www.graphicon.ru/2005/proceedings/papers/VezhntvetsKonushin.pdf.

Similarly, United States of America Patent US7035451 discloses a method of creating a depth map including the steps of assigning a depth to at least one pixel or portion of an image, determining relative location and image characteristics for each at least one pixel or portion of the image, utilizing the depth(s), image characteristics and respective location to determine an algorithm to ascertain depth characteristics as a function relative to location and image characteristics, utilizing said algorithm to calculate a depth characteristic for each pixel or portion of the image, wherein the depth characteristics form a depth map for the image. In a second phase of processing, the depth maps form key frames for the generation of depth maps for non-key frames using relative location, image characteristics and distance to key frame(s). The patent describes a method for assigning a certain depth to a set of pixels, and propagating this to a full depth map.

However, all the known methods of generating a depth map require the user to assign (absolute or relative) depths to one or more parts of at least one image. A problem of having to draw a depth map is the need to explain the complicated computer drawing programs to a user and to explain how they must draw a depth map for a given picture. In general, to obtain a satisfactory result for a non-skilled user with a reasonable degree of consistency is an almost impossible task. For a substantial amount of images, a non-skilled user will not be able to operate the depth assignment program sufficiently well to provide an acceptable depth map. In addition, an approach where a depth map is drawn also requires an interface that uses a pen to outline object contours or to point to objects. It is therefore not easy to make a simple user interface that requires little or no explanation before use.

SUMMARY OF THE INVENTION

It is therefore an object of the invention to improve upon the known art. According to a first aspect of the present invention, there is provided a method of generating a depth map for an image comprising:

    a) displaying the image,
    b) displaying an indication on the image in a first region of the image,
    c) displaying a plurality of labels,
    d) receiving a user input selecting one of the plurality of labels,
    e) setting a label for the first region to the selected label,
    f) repeating the steps b) to e) for a different region, until a predefined event has occurred,
    g) accessing a predefined scheme for converting a label map to a depth map, and
    h) generating a depth map according to the predefined scheme and labels set following the user inputs.

According to a second aspect of the present invention, there is provided a system for generating a depth map for an image comprising a display device arranged to display the image, to display a plurality of labels and repeatedly to display an indication on the image in different regions of the image, a user interface arranged to receive a plurality of user inputs selecting one of the plurality of labels for each display of the indication for a respective region, and a processor arranged to set a label for each respective region to the selected label, to access a predefined scheme for converting a label map to a depth map, and to generate a depth map according to the predefined scheme and labels set following the user inputs.

According to a third aspect of the present invention, there is provided a computer program product on a computer readable medium for generating a depth map for an image, the product comprising instructions for:

a) displaying the image,
b) displaying an indication on the image in a first region of the image,
c) displaying a plurality of labels,
d) receiving a user input selecting one of the plurality of labels,
e) setting a label for the first region to the selected label,
f) repeating the instructions b) to e) for a different region, until a predefined event has occurred,
g) accessing a predefined scheme for converting a label map to a depth map, and
h) generating a depth map according to the predefined scheme and labels set following the user inputs.

Owing to the invention, it is possible to provide a method of generating a depth map which firstly, does not require the user to select any regions within the image and does not require the user to provide any depth values for any part of the image under consideration. There is provided an interface for handling an image without requiring knowledge of a depth map or how to create one. Instead of having to draw a depth map, multiple (semantic) questions are asked about the picture. The answers to these questions as input by the user effectively provide a label for a particular region. In this manner the user may provide a small part of a labeling; i.e. when correcting an automatically generated labeling, or may provide a large part of a labeling. Once these questions have been answered, a depth map is automatically calculated and the 3D picture may be viewed on, for example, a 3D picture frame.

There is provided a method that allows a user to create a depth map for a still image whereby the user is asked to input semantic information for certain image locations. The system will automatically determine the location at which information is asked, for example, depending on the presented image and the answers already given. The user can input the semantic information (for example whether the indicated region represents ground, or sky, etc.) using a button interface. The user does not need to assign depth values or directly interact with the depth map itself.

There is no need to explain anything to a user if simple questions are asked about elements in the image. The system is designed effectively to ask questions about different elements in the picture. These questions can be about the objects at a certain image location where the image location is indicated automatically using a symbol such as a circle or a question mark. The answers to these questions are then used automatically to calculate a depth map. It is therefore also not necessary for the user to see the depth map, which can be created and used completely without the user being aware of the process or the existence of the depth map. The user only needs to see the intermediate or end result on, for example, an autostereoscopic display.

Advantageously, the step of setting a label for a region to the selected label comprises setting a confidence level for the selected label for the respective region to 1. Confidence levels can be used in relation to one or more regions in the image, in relation to different possible labels. For example, three different labels, L1, L2 and L3 may be used in relation to an image. Semantically, they may respectively relate to ground, sky and object. If a user is asked about a specific region and they assign the label "ground" to that region, then the label L1 will have a confidence level of 1 in relation to that region. The region has a confidence level of 0 in relation to the other two labels L2 and L3.

Preferably, the method further comprises, following the setting of a label for a region to the selected label, setting a confidence level for the selected label for regions bordering the respective region according to a predefined algorithm. The advantage of using confidence levels for the labels attached to a region is that when a user selects a label for a region, this can be used to infer information about segments that connect to the current region. For example, similar color or shape information may be used to set a confidence level of between 0 and 1 for the same selected label for a neighboring region. In this way label information will propagate through the image, without the user being asked about every single region. Indeed, as the number of regions for which the user has chosen a label increases, the likelihood that all regions will have a confidence level above zero for at least one label is increased. In this way a label map is generated for the entire image.

In one embodiment, the step of displaying the indication on the image in a different region of the image advantageously includes selecting a different region with the lowest confidence level for a label. Once the user has made a label selection for a region, then the system will choose a new region for the user to be asked about. One advantageous method of achieving this is to select the current region that has the lowest confidence level for a label, either as an individual label or as a total across all labels. This increases the speed by which the label map can be generated, and reduces the number of times that the user needs to be quizzed about specific regions in the image.

In a different embodiment, the step of displaying the indication on the image in a different region of the image can include selecting a different region with confidence levels for two different labels both above a predefined threshold. Since the method is enhanced by neighboring regions being assigned confidence levels after the user selection, then it is possible that a single region will have confidence levels above zero for two or more different labels. The system can be deliberately configured to identify such regions with confidence levels for two different labels both above a predefined threshold, and select the region for the user to choose a label, thereby raising one label confidence level to one, and removing obvious uncertainty in the label map.

Preferably, the method further comprises displaying a plurality of image types, receiving a user input defining the image as one of the displayed image types, and selecting the labels to be displayed according to the defined image type. Before the user begins the process of being asked about the image being reviewed, they could be asked a simple question, such as whether the image was taken inside or outside, or whether the image contains people for example. The labels that are presented to the user are then adjusted according to the image type chosen by the user in response to this question. This streamlines the process, and allows a more appropriate predefined scheme for converting a label map to a depth map to be used.

Advantageously, the method further comprises oversegmenting the image, according to a predefined oversegmentation algorithm, wherein the image is partitioned into multiple pixel regions. One simple method by which the regions can be used is to display the indication to the user in a first region, and when the user has made a label selection, then move the indication to a new region.

BRIEF DESCRIPTION OF THE DRAWINGS

Embodiments of the present invention will now be described, by way of example only, with reference to the accompanying drawings, in which:-

Fig. 1 is a schematic diagram of a device for generating a depth map,
Fig. 2 is a diagram of an image type and label hierarchy,
Fig. 3 is a schematic diagram showing the creation of the depth map from an image,
Fig. 4 is a flowchart of a method for generating the depth map,
Fig. 5 is a schematic diagram of a device and server for generating the depth map, and
Figs. 6a-c is a schematic diagram of an image, a label map and a depth map.

DETAILED DESCRIPTION OF EMBODIMENTS

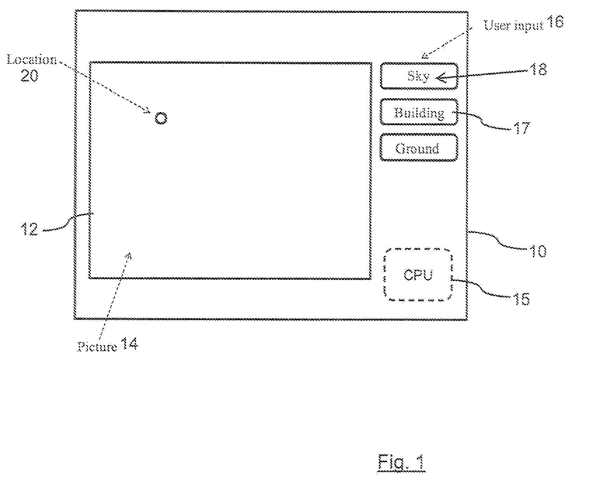

A digital photo frame 10 is shown in Figure 1. The photo frame has a display device 12, which is displaying an image 14, a processor 15, and also comprises a user interface component 16, which comprises three buttons 17. Each button 17 displays a label 18, which in this example are the labels "sky", "building" and "ground". The specific label 18 that is displayed by an individual button 17 can be changed by the photo frame 10, as each button 17 is effectively an individual display component.

An indication 20 is shown on the image 14, under the control of the processor 15, in a region of the image 14. The location 20 in the picture 14 is indicated with a circle (a question mark or arrow may be used). The user can select one of the small set of labels 18 that are presented as selection options. Figure 1 provides a proposed user interface for 3D picture creation. By pressing one of the three buttons 17 the user sets the class of the object at the location 20 being indicated with the circle. As soon as the selection has been made the circle 20 changes location and a new input can be given by the user. The position of the circle 20 is fixed for the first question. After each following question the circle 20 is repositioned depending on the classification result. The circle 20 is centered at the centre position of the region for which the certainty in any one of the given classes is lowest.

Unknown to the user, in the preferred embodiment, the processor 15 has performed a color oversegmentation of the image 14 to derive a dense class label map. When the user selects a label 18, this label 18 is assigned to the region in which the indication 20 falls. For this region, the class label is set to the user selected label 18 and the confidence is set to 1.0 (which is the maximum). The indication 20 is then moved to a new location by the processor 15, and the process is repeated. The process stops when the user is satisfied with the result, or alternatively this could also be after a fixed number of questions, or when an automatically calculated measure for the overall quality or confidence reaches a predefined level. At this point there are still many regions that have not been assigned a class number. This can be considered the 'unassigned set' of regions. For these regions a class label is then found using the following algorithm:

1. Set confidences for all regions and all possible labels to zero;

2. Set position of circle at centre of image (position for the 1st question);
3. While the user has not exited the process;

    a. Get user input for the indicated region;
    b. Set the class label for the indicated region to selected label;
    c. Set all regions in the 'unassigned set' to 0 for all class labels;
    d. For all class labels k=1..K;

        i. For $N_{iter}$ iterations;
        1. For all regions that are in the 'unassigned set';

            a. Update the confidence in class label k;

    e. For all regions;

        i. Select label that has highest confidence;

    f. Update class label map;
    g. Update depth map;
    h. Reposition circle to region with least confidence in any class;

4. End.

The update of the confidence in label k is based on the confidence in label k of neighboring regions. For region i, with neighboring regions j, the confidence is updated using:

$$p_i^{(k)} \leftarrow \frac{\sum_j w_{ij} p_j^{(k)}}{\sum_j w_{ij}}$$

where

$$w_{ij} = \exp\left(-\alpha\left(\left|r_i - r_j\right| + \left|g_i - g_j\right| + \left|b_i - b_j\right|\right)\right)$$

The number of iterations is typically $N_{iter} = 50$. The weight in the second equation is set to $\alpha = 0.1$. To obtain better mixing it is possible to scan the region list front to back and back to front doing several iterations in each direction. In a preferred embodiment fifty iterations are conducted in each direction.

The labeled image is then converted into a depth map using the following algorithm:

1. Find the largest y-coordinate, $y_{max}$ for which a pixel has label 'Ground' (Note that the origin of the right-handed coordinate system lies at bottom left of the image). The distance from this point to the bottom of the image is h. The image height is called H;
2. Compute the slope of the 'Ground':
$s = \Delta/y_{max}$; (for the parameter $\Delta = 200$ is used)
3. Perform a connected components labeling on the label map L;
4. Determine the vertical position $y_m$ of the bottom pixel for each connected component m;
5. Scan the label map L column-wise from bottom to top and compute depth map D:

    If L(x,y) = 'Ground'        then D(x,y) = 255-s.y;

(continued)

If L(x,y) = 'Building' or 'Other'   then D(x,y) = 255-$y_m$.s;
If L(x,y) = 'Sky'                    then D(x,y) = 0.

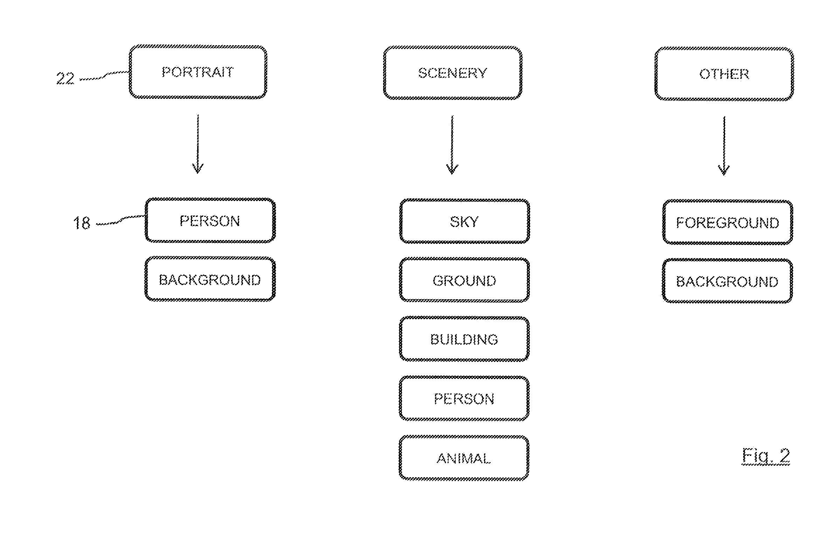

Figure 1 shows a simple menu structure. However, to make the conversion of image to depth map more generally applicable a hierarchy may be used as shown in Figure 2. It is noted that the hierarchy as presented in Figure 2 is merely exemplary. An alternative hierarchy that may be used when generating a depth map in accordance with the present invention is presented in "In Depth Information by Stage Classification" by Nedovic, V.; et al, published in Computer Vision, 2007. ICCV 2007, 14-21 Oct. 2007.

The user is then first asked about the general nature of the picture. If the picture contains people close-up, the user will see a different menu structure. The interpretation of the label map may also differ. For instance, people may be assumed to be in the foreground and faces that occupy a large part of the picture a detailed depth model could be assigned. Hierarchy allows for 'context dependent' menu and conversion of label map to depth map. The display device 12 displays a plurality of image types 22, and the photo frame 10 receives a user input defining the image 14 as one of the displayed image types 22, and there is selected the labels 18 to be displayed according to the defined image type 22. This assists the user in the semantic selection of the types 18 that relate to the image 14 being processed.

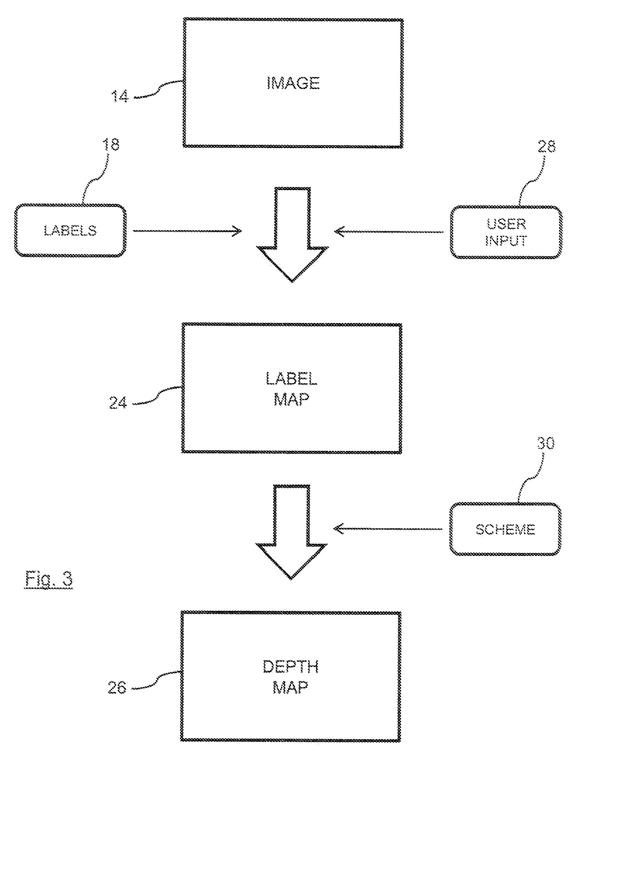

Figure 3 illustrates the data flow that occurs, in which an image 14 is converted to a label map 24, which is then converted into a depth map 26. In the creation of the label map 24, the labels 18 and the user input 28 are used to generate the label map 24. As discussed above, the labels 18 are predefined, and the user selects a label 18 from the list presented to them, when they are asked about a specific location in the image 14. The conversion of the label map 24 to the depth map 26 is according to a predefined scheme 30, an example of which is given above.

The main advantage of the process encapsulated in Figure 3 is that, firstly the user does not have to provide any depth information, and secondly they do not have to select or define any regions in the original image 14. This makes the user's task much simpler, and combined with the labels 18 and the scheme 30, is sufficient to generate a working depth map 26, for the original image 14. It also means that the depth map 26 can be created using a very simple device, such as the photo frame 10, which has a very simple user interface, and does not support a pointing device, either real (such as a pen), or virtual (such as a mouse cursor).

The process of creating the depth map 26 is effectively invisible to the user, and occurs in the background, as the user is making label choices, in respect of the current location of the indication 20. The classification algorithm is likewise invisible to the user; the resulting classification need not be shown to the user on the image 14 (although it could be if a more knowledgeable user wishes to see the result of the classification superimposed on the image 14).

Figure 3 shows the process as serial series of stages, but in fact the label map and the depth map can be built up in parallel. This means that as soon as the user makes a label choice for the current location of the indication 20 then the label map 24 will reflect that change, and the depth map 26 can be generated just with that current information. Once the user makes another label selection for a new location, then the label map 24 and the depth map 26 will be updated. If the display device 12 is a 3D display device, then the image 14 being displayed by that device 12 could be rendered in 3D, as the depth map 26 is being built up while the user makes their choices about different regions in the image. In this way, the user can terminate the process once they are satisfied with the end result.

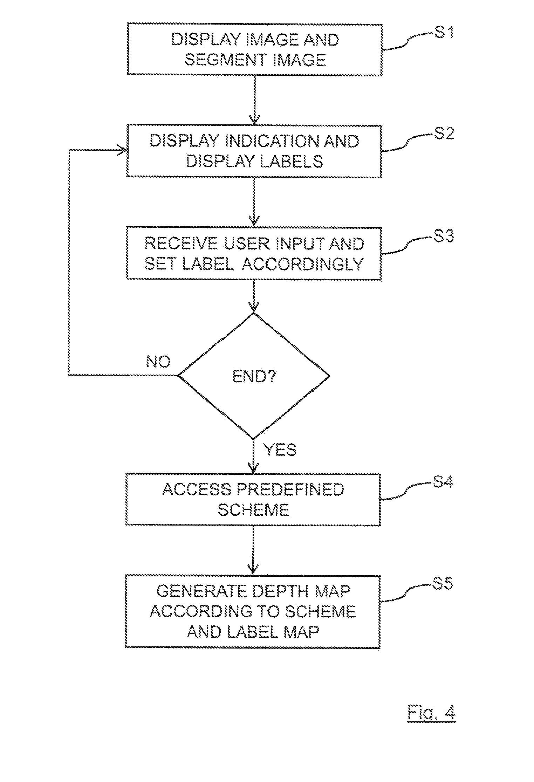

The overall process of generating the depth map 26 is summarized in Figure 4. The method of generating the depth map 26 for the image 14 comprises, at step S1, displaying the image 14, and segmenting the image 14, according to a predetermined oversegmentation algorithm. Any suitable segmentation algorithm that generates an oversegmentation can be used, for example relying on color or edge detection. The algorithm should advantageously be tuned to over-segment the image 14, as this has been found to generate the best results.

At step S2, there is performed the displaying of the indication 20 on the image 14, corresponding to a first location of the image 14 and the displaying of the plurality of labels 18. The first location marked with the indication 20 is determined automatically, for example by simply selecting the location in the centre of the image 14, or by selecting the centre location of the largest region by pixel size. Other methods of selecting the first location to be marked can be used.

The next stage in the process is step S3, which comprises receiving the user input 28, which is selecting one of the plurality of labels 18 being displayed to the user, and setting a label 18 for the first segment to the selected label 18, The user is asked to identify the current part of the image 14 in the location of the indication 20. The user is unaware that this relates to a region in a segmentation of the image 14. The user simply sees a pointer 20 and presses the "sky" button 17, for example. This results in the appropriate label 18 being attached to that region.

After this setting of the label, the method will make a check to see if the selecting of the labels by the user should terminate. If the answer is no, then the method returns to step S2, and displays the indication 20 on the image 14 corresponding to a different segment of the image 14, receives a user input 28 selecting one of the plurality of labels 18, and sets the label 18 for the different region to the selected label 18. This process of repeating the displaying of the indication, the receiving of the user input, and setting a label for a different region to the selected label, continues until a predefined condition/event has occurred. This will then end this part of the process. The predefined event might simply be the user terminating the process or might be that a certain number of questions about different regions have been answered, or enough regions have been identified to be reasonably certain about the final result and so on.

At step S4, the process continues by accessing the predefined scheme 30 for converting the label map 24 to the depth map 26, and finishes at step S5, which comprises generating the depth map 26 according to the predefined scheme 30 and the labels 18 set following the user inputs 28. In this way the depth map 26 is produced. The flowchart shows the termination question being asked after step S3, but in fact steps S4 and S5 could directly follow from step S3, with the loop round being carried out after step S5, returning back to step S2. In this way an iterative depth map 26 is produced, and a more skilled user could review the depth map 26 before deciding whether to answer a further question about a new location of the indication 20.

The use of an oversegmentation algorithm in step S1 is the preferred embodiment of the process, but is not an essential step. If oversegmentation is not used, then a single pixel can be selected, or a circular region of variable size. The information can then be propagated from this region using pixel neighborhoods. For example, the region may be just be the exact area marked by the indication 20 if it is a circle or the like, or may be a certain number of pixels surrounding the indication 20. Once the user makes a label selection, then that label 18 is attached to that point or region, and may be populated out to other regions, as discussed above.

It is possible to include different kinds of prior information into the processing, as a method of pre-populating confidence levels for different labels 18 within an image 14, with the user inputs used to improve upon the predetermined confidence levels. For example, it is possible to give initial (prior) confidences to labels based on color etc. (for example, blue in the top of the image is probably sky, skin tone parts probably belong to a person and so on).

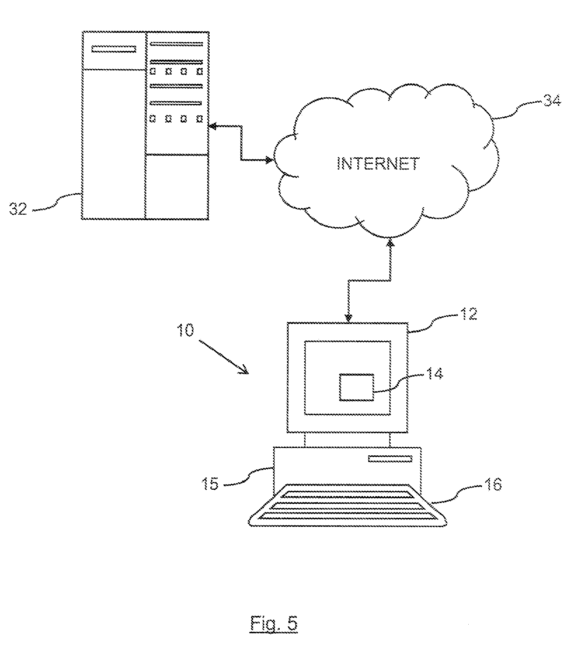

Although the above description has described the use of photo frame, where all of the processing of the image 14, label map 24 and depth map 26 takes place at the one location under the control of the processor 15, Figure 5 shows an alternative implementation of the system. The embodiment of this Figure uses a client device 10 such as a conventional desktop computer 10, which is connected to a web service being run by a server 32, via a network 34, such as the Internet. This configuration allows users to access a service that will generate a depth map 26 from an image 14, without the user having to purchase any special hardware, as a computer 10 connected to the Internet 34 is very widely available and already exists in many homes.

In this embodiment, the processing of the image can take place solely under the control of the local processor 15, or could be carried out by a processing function that is distributed between the processor 15 and the server 32. To access the depth map creation service, the user will connect to a website in a conventional manner and either upload their image 14 to the web service being run on the server 32, or will download a client program from the server 32 in order to go through the process of generating the depth map 26. The user will interface with the questions relating to the labels 18 to be assigned to the parts of the image 14 in the same way as described above. Once they have completed the label questions, then the depth map 26 will be generated.

In the above description, the location of the indication 20 that is displayed on the image 14 is controlled by the processor 15. However, the system can be adapted so that a user selection of the location of the indication 20 can also be made, in addition to the decisions of the processor 15. One advantage of the current system is that it can be implemented in a device which does not have any pointing or cursor functions, but if this functionality is available on the device, such as in the embodiment of Figure 5, then the user can indicate a point in the image 14 and give the semantic information for that point.

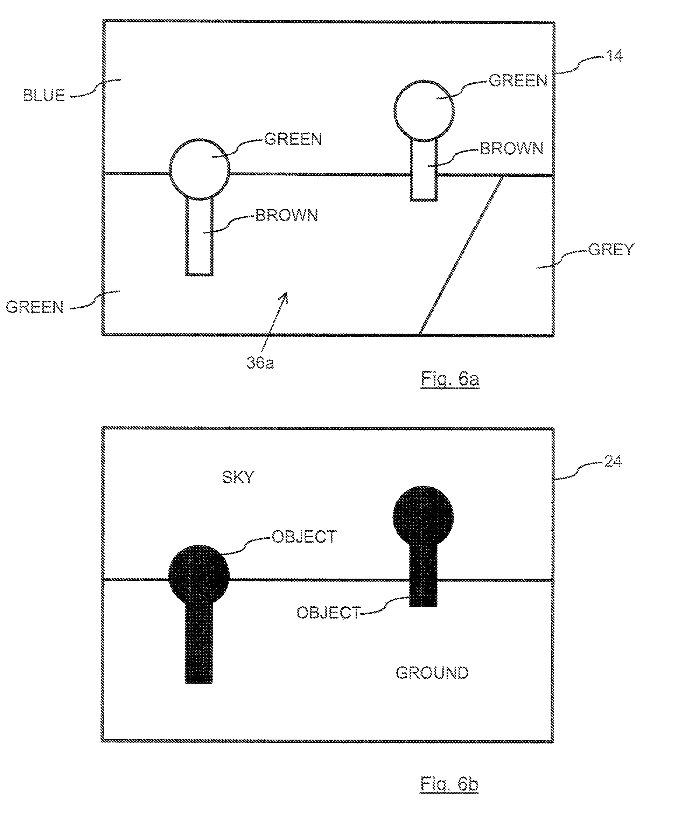

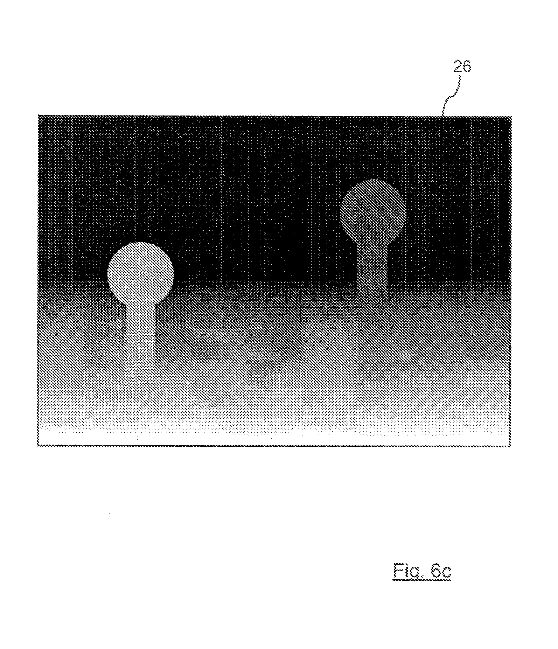

Figure 6 shows the process of generating a depth map 26 being carried out for a specific image 14. This highly schematic image 14 is to illustrate the invention in a simple manner. The image 14 comprises two trees on a grass verge by a road, with the sky behind. Figure 6a shows the image 14 after it has been segmented according to color into segments 36. The segmentation, as discussed above, is not seen by the user, this is carried out by the processor 15 in the background, and is not displayed. In reality, for a real image, a much larger number of different segments 36 will be created by the segmentation algorithm.

In order to generate the depth map 26 for this image 14, the next action will be to display an indication 20 (not shown), for segment 36a, to the end user. The user will select the label "ground" for this particular segment, from the displayed labels 18 (again not shown). The indication 20 will then be moved to a new segment 36, under the control of the processor 15, and the labeling process will continue. Figure 6b shows the label map 24 that will result from the user labeling the different segments 36. The label map 24 is comprised of four different regions, being the sky, ground and two separate objects.

Once the labeling process has terminated, then the depth map 26 will be generated from the label map 24 and the defined scheme 30. A scheme is described above. In its simplest form, depth values from 0 to 255 (a relative depth scale) will now be assigned to each pixel of the original image 14. The pixels of the sky will be set to the deepest depth (0), and the pixels making up the ground will be given a range of values, with each row of pixels having the same depth value. The row lowest in the image 14 (at the bottom) will have a value of 255 and the values in the rows above will scale down to 0. All of the pixels in each object will have the same depth values, which will be equivalent to the row of pixels for the ground at their lowest y co-ordinate (effectively where they touch the ground).

In this way a depth map 26 is generated, which is shown in Figure 6c. The depth map 26 has values in the range of 0 to 255 for each of the pixels in the original image, and these can be represented as grey scale values, in order to provide a depth map 26 that can be viewed by the naked eye, in a meaningful sense. As can be seen, the ground has a depth value that is scaled, while the individual objects have constant depth values that place them at a certain distance within the relative scale 0 to 255.

The above presented algorithm may be used advantageously to convert the labeling into a depth map. The present invention may be used advantageously with other methods of generating a depth map, such as method disclosed in "Depth map generation by image classification" by S. Battiato, et al, published in Proc. SPIE, Vol. 5302, 95 (2004) hereby incorporated by reference. This particular paper discloses how a segmentation of an image may be used to generate a depth map. The present invention may be used advantageously to improve the labeling following the segmentation and thereby may provide an improved depth map.

It will be appreciated that in a system for generating a depth map according to the present invention, the user input may be provided in a variety of ways and need not be limited to the use of buttons, and/or a touch screen. In this respect it is noted that in particular when using a photo frame, it is not advisable to use a touch-sensitive interface on the front of the device. The application of touch-sensitive input means on the front of the device generally results in fingerprints and smudges being left on the display surface. A simple alternative to a touch-sensitive input means is provided by an electrostatic proximity detector which may be integrated in the display device/photo frame. Alternatively a touch sensitive input device may be provided on the side of the display device.

It will be appreciated that the above description for clarity has described embodiments of the invention with reference to different functional units and processors. However, it will be apparent that any suitable distribution of functionality between different functional units or processors may be used without detracting from the invention. For example, functionality illustrated to be performed by separate processors or controllers may be performed by the same processor or controllers. Hence, references to specific functional units are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1. A method of generating a depth map (26) for an image (14) comprising:

> a) displaying the image (14),
> b) displaying an indication (20) on the image (14) in a first region (36) of the image (14),
> c) displaying a plurality of labels (18),
> d) receiving a user input (28) selecting one of the plurality of labels (18),
> e) setting a label (18) for the first region (36) to the selected label (18),

f) repeating the steps b) to e) for a different region (36), until a predefined event has occurred,

g) accessing a predefined scheme (30) for converting a label map (24) to a depth map (26), and

h) generating a depth map (26) according to the predefined scheme (30) and labels (18) set following the user inputs (28).

2. A method according to claim 1, wherein the step of setting a label (18) for a region (36) to the selected label (18) comprises setting a confidence level for the selected label (18) for the respective region (36) to 1.

3. A method according to claim 1 or 2, and further comprising, following the setting of a label (18) for a region (36) to the selected label (18), setting a confidence level for the selected label (18) for regions (36) bordering the respective region (36), according to a predefined algorithm.

4. A method according to claim 3, wherein the step of displaying the indication (20) on the image (14) in a different region (36) of the image (14) includes selecting a different region (36) with the lowest confidence level for a label (18).

5. A method according to claim 3, wherein the step of displaying the indication (20) on the image (14) in a different region (36) of the image (14) includes selecting a different region (36) with confidence levels for two different labels (18) both above a predefined threshold.

6. A method according to any preceding claim, and further comprising displaying a plurality of image types, receiving a user input defining the image (14) as one of the displayed image types, and selecting the labels (18) to be displayed according to the defined image type.

7. A method according to any preceding claim, and further comprising segmenting the image (14), according to a predefined segmentation algorithm, wherein each region (36) of the image (14) comprises a segment (36) of the image (14).

8. A system for generating a depth map (26) for an image (14) comprising:

- a display device (12) arranged to display the image (14), to display a plurality of labels (18) and repeatedly to display an indication (20) on the image (14) in different regions (36) of the image (14),
- a user interface (16) arranged to receive a plurality of user inputs (28) selecting one of the plurality of labels (18) for each display of the indication (20) for a respective region (36), and
- a processor (15) arranged to set a label (18) for each respective region (36) to the selected label (18), to access a predefined scheme (30) for converting a label map (24) to a depth map (26), and to generate a depth map (26) according to the predefined scheme (30) and labels (18) set following the user inputs (28).

9. A system according to claim 8, wherein the system comprises a digital photo frame (10).

10. A system according to claim 8, wherein the system comprises a computer (10) and a server (32).

11. A computer program product on a computer readable medium for generating a depth map (26) for an image (14), the product comprising instructions for:

a) displaying the image (14),

b) displaying an indication (20) on the image (14) in a first region (36) of the image (14),

c) displaying a plurality of labels (18),

d) receiving a user input (28) selecting one of the plurality of labels (18),

e) setting a label (18) for the first region (36) to the selected label (18),

f) repeating the instructions b) to e) for a different region (36), until a predefined event has occurred,

g) accessing a predefined scheme (30) for converting a label map (24) to a depth map (26), and

h) generating a depth map (26) according to the predefined scheme (30) and labels (18) set following the user inputs (28).

Fig. 1

Fig. 2

IMAGE — 14

LABELS — 18

USER INPUT — 28

LABEL MAP — 24

SCHEME — 30

Fig. 3

DEPTH MAP — 26

Fig. 4

Fig. 5

14

BLUE

GREEN

GREEN

BROWN

BROWN

GREEN

GREY

36a

Fig. 6a

24

SKY

OBJECT

OBJECT

GROUND

Fig. 6b

26

Fig. 6c

## EUROPEAN SEARCH REPORT

Application Number

EP 08 17 0482

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | SEBASTIANO BATTIATO, SALVATORE CURTI, MARCO LA CASCIA, MARCELLO TORTORA, AND EMILIANO SCORDATO: "Depth map generation by image classification" PROC. SPIE, THREE-DIMENSIONAL IMAGE CAPTURE AND APPLICATIONS VI, vol. 5302, 2004, pages 95-104, XP002527303 | 1-5,7-11 | INV. G06T7/00 |
| Y | * the whole document * | 4,5 | |
| X | EP 1 498 847 A (ST MICROELECTRONICS SRL [IT]) 19 January 2005 (2005-01-19) | 1-11 | |
| Y | * abstract * * paragraph [0009] - paragraph [0010] * * paragraph [0036] - paragraph [0038] * * figure 1 * * page 21 * | 4,5 | |
| Y | US 2004/205482 A1 (BASU SANKAR [US] ET AL) 14 October 2004 (2004-10-14) * paragraph [0001] - paragraph [0003] * * paragraph [0026] - paragraph [0037] * | 4,5 | |
| | | | TECHNICAL FIELDS SEARCHED (IPC) |
| Y | PRAKASH ADISESHAN AND TRACY L. FABER: "Classification of tissue-types by combining relaxation labeling with edge detection" PROC. SPIE. MEDICAL IMAGING V: IMAGE PROCESSING, vol. 1445, 1991, pages 128-132, XP002527304 sections 4-6 | 4,5 | G06T |
| A | HADDON J F ET AL: "Autonomous segmentation and neural network texture classification of IR image sequences" 19960101, 1 January 1996 (1996-01-01), pages 6/1-6/6, XP006530515 section 3.4 | 3-5 | |

-/--

The present search report has been drawn up for all claims

| Place of search | Date of completion of the search | Examiner |
|---|---|---|
| Munich | 12 May 2009 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt
European
Patent Office
Office européen
des brevets

# EUROPEAN SEARCH REPORT

Application Number

EP 08 17 0482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOBUS BARNARD ET AL: "Evaluation of Localized Semantics: Data, Methodology, and Experiments" INTERNATIONAL JOURNAL OF COMPUTER VISION, KLUWER ACADEMIC PUBLISHERS, BO, vol. 77, no. 1-3, 7 August 2007 (2007-08-07), pages 199-217, XP019581868 ISSN: 1573-1405 * the whole document * | 1,8,11 | |
| A | HANBURY ET AL: "A survey of methods for image annotation" JOURNAL OF VISUAL LANGUAGES & COMPUTING, ACADEMIC PRESS, vol. 19, no. 5, 1 October 2008 (2008-10-01), pages 617-627, XP025408252 ISSN: 1045-926X [retrieved on 2008-01-29] * the whole document * | 1,8,11 | |
| A | YEA-SHUAN HUANG ET AL: "Creating Depth Map from 2D Scene Classification" INNOVATIVE COMPUTING INFORMATION AND CONTROL, 2008. ICICIC '08. 3RD INTERNATIONAL CONFERENCE ON, IEEE, PISCATAWAY, NJ, USA, 18 June 2008 (2008-06-18), page 69, XP031309340 ISBN: 978-0-7695-3161-8 * the whole document * | 1,8,11 | TECHNICAL FIELDS SEARCHED (IPC) |

-/--

The present search report has been drawn up for all claims

| Place of search | Date of completion of the search | Examiner |
|---|---|---|
| Munich | 12 May 2009 | Katartzis, Antonios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

Europäisches
Patentamt
European
Patent Office
Office européen
des brevets

**EUROPEAN SEARCH REPORT**

Application Number

EP 08 17 0482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | VLADIMIR NEDOVIC ET AL: "Depth Information by Stage Classification" COMPUTER VISION, 2007. ICCV 2007. IEEE 11TH INTERNATIONAL CONFERENCE O N, IEEE, PI, 1 October 2007 (2007-10-01), pages 1-8, XP031194545 ISBN: 978-1-4244-1630-1 * the whole document * | 1,8,11 | |
| D,A | US 7 035 451 B2 (HARMAN PHILIP VICTOR [AU] ET AL) 25 April 2006 (2006-04-25) * the whole document * | 1,8,11 | |
| D,A | VEZHNEVCTS V., KONOUCHINE V.: "Grow-Cut - Interactive Multi-Label N-D Image Segmentation by cellular automata" PROC GRAPHICON, 2005, XP002527305 * the whole document * | 1,8,11 | |

TECHNICAL FIELDS
SEARCHED    (IPC)

The present search report has been drawn up for all claims

| Place of search | Date of completion of the search | Examiner |
|---|---|---|
| Munich | 12 May 2009 | Katartzis, Antonios |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 08 17 0482

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2009

| Patent document cited in search report | | Publication date | Patent family member(s) | | Publication date |
|---|---|---|---|---|---|
| EP 1498847 | A | 19-01-2005 | US 2005053276 A1 | | 10-03-2005 |
| US 2004205482 | A1 | 14-10-2004 | NONE | | |
| US 7035451 | B2 | 25-04-2006 | WO 0213141 | A1 | 14-02-2002 |
| | | | CA 2418800 | A1 | 14-02-2002 |
| | | | EP 1316068 | A1 | 04-06-2003 |
| | | | JP 2004505393 | T | 19-02-2004 |
| | | | MX PA03001171 | A | 30-06-2003 |
| | | | US 2002048395 | A1 | 25-04-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7035451 B

**Non-patent literature cited in the description**

- **Nedovic, V. et al.** Depth Information by Stage Classification. *Computer Vision,* 14 October 2007

- **S. Battiato et al.** Depth map generation by image classification. *Proc. SPIE,* 2004, vol. 5302, 95